(19) **Europäisches Patentamt European Patent Office Office européen des brevets**

(11) **EP 4 668 032 A2**

(12) **EUROPEAN PATENT APPLICATION**

(43) Date of publication:
24.12.2025 Bulletin 2025/52

(21) Application number: 25213707.0

(22) Date of filing: 11.10.2021

(51) International Patent Classification (IPC):
**G05B 15/02** (2006.01)

(52) Cooperative Patent Classification (CPC):
**G05B 15/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 09.10.2020 IT 202000023851

(62) Document number(s) of the earlier application(s) in accordance with Art. 76 EPC:
**21802799.3 / 4 226 220**

(71) Applicant: **Vimar S.p.A.**
**36063 Marostica (VI) (IT)**

(72) Inventors:
• **POMELLA, Alberto Antonio**
**33100 Udine (IT)**

• **ROMANIN, Gianluca**
**33010 Osoppo (UD) (IT)**
• **RAVAGNIN, Alessandro**
**36060 Romano d'Ezzelino (VI) (IT)**

(74) Representative: **Locas, Davide et al**
**Cantaluppi & Partners S.r.l.**
**Piazzetta Cappellato Pedrocchi, 18**
**35122 Padova (IT)**

Remarks:
This application was filed on 05.11.2025 as a divisional application to the application mentioned under INID code 62.

(54) **CONTROL METHOD OF AN ELECTRICAL SYSTEM**

(57) A method for controlling an electrical system, in particular for buildings, of the type comprising at least one control device and a plurality of loads, there being defined in the electrical system a plurality of actuation functions which can be carried out by means of the control device or by means of a plurality of control devices, the method comprising combining with the actuation functions the actuation of one or more of the loads, storing actuations carried out by a user, extracting from the actuations stored a sequence of actuations repeated by the user, modifying the combination of the actuation functions with the loads on the basis of the sequence of repeated actuations extracted.

Fig. 1

EP 4 668 032 A2

## Description

The invention relates to a method for controlling an electrical system and further relates to a control device and a kit for carrying out this method.

It is known in electrical systems to use switches which are configured to open and close the electrical supply circuits of the loads. It may be noted that, in this context, the term "load" is intended to be understood to be any circuit - also one constituted by a single element - which, in a state connected to the outlet of another circuit, draws power therefrom, such as, for example, a light point or a motorized shutter.

In this context, there is perceived the tendency to construct system topologies which provide for control points with multiple switches which are concentrated in flush-mounted boxes which are more or less widespread in the walls of the environments of the buildings, generating a certain complexity for the user in understanding which load is associated with a predetermined button.

Furthermore, in some applications, such as, for example, in corridors, there are often used sequential relays which are connected to the same number of push-buttons to control the lights of the environments successively.

A main disadvantage of this prior art is the fact that the user has to carry out attempts by actuating multiple switches or multiple combinations of switches before understanding how to turn on and off a predetermined load.

Furthermore, it must be observed that users tend to be habitual. Therefore, only some of the controls available are effectively used for 90% of the time of use. Therefore, the control interfaces normally used by the user are not really used to the maximum extent of their potential.

Various attempts have been carried out to solve the problem of improving the user experience and the operation of the switches. The problem has evident difficulties as a result, furthermore, of the need to reduce the number of additional components which affect the cost and the installation complexity of the electrical system.

The technical problem addressed by the present invention is to provide a method, a control device and a kit for carrying out this method which is structurally and functionally configured to at least partially overcome one or more of the disadvantages set out with reference to the cited prior art.

In the context of this problem, an object of the present invention is to provide a method for controlling an electrical system which assists the user in actuating the loads, for example, the light points, of more frequent use through a simplified procedure.

Another object is to provide a method which allows the controls which are used most often to be actuated without any need for selecting one or more specific switches within complex control panels.

This problem is solved and these objectives are achieved by the invention by means of a method, a control device and a kit comprising one or more of the features mentioned in the appended claims.

On the basis of a first aspect, the method for controlling an electrical system according to the present invention is intended to be used in an electrical system which comprises at least one control device and a plurality of loads. In the system there is defined a plurality of actuation functions which can be carried out through the control device or through a plurality of the control devices, the loads being actuated by the actuation functions.

In one aspect, one (or more than one) of the actuation functions is defined in the at least one control device which advantageously comprises at least one operating element (for example, a physical button which is operatively connected to one or more relays) configured to implement the one (or more than one) of the actuation functions.

It may be noted that, advantageously, the plurality of actuation functions can be carried out by means of two different control devices or by means of the same control device (for example, with two buttons, two tactile zones, two actuation methods of a single button, etc.).

It will be appreciated that the electrical system in question is particularly suitable for use in buildings, but it will also be able to be used in other contexts, such as, for example, in the electrical systems of a ship.

The method comprises combining with the actuation functions the actuation of one or more of the loads in a unique manner.

It may be noted that, in this context, the term "actuation" is intended to be understood to be the action and the effect of operating a load to which the actuation relates, generally allowing the supply of electrical energy to the load by means of a control device.

There is further provision for storing the actuations carried out by a user for a predetermined period of time or storing a predefined number of actuations carried out by the user, preferably by way of storage means of the electrical system.

It will be appreciated that, in some cases, the storage means of the electrical system may comprise or be formed at least partially by a "cloud" which is accessible remotely.

In one aspect, there is provision for extracting from the actuations stored a sequence of actuations repeated by the user.

It may be noted that, in this context, the term "sequence of actuations repeated by the user" is preferably intended to be understood to be a sequence of actuations which is at least partially representative of the habits of the user in relation to actuating the loads, such as, for example, a sequence of actuations repeated by the user in a cyclical and/or statistically frequent manner, where applicable also in accordance with boundary conditions, such as, for example, the time of day and/or the ambient brightness.

Advantageously, the sequence of repeated actuations is extracted by means of automatic learning systems. It will be appreciated that automatic learning systems preferably comprise artificial intelligence algorithms. In this manner, the presence of advanced software advantageously reduces the need for additional controls. In one aspect, the sequence of actuations comprises at least two actuation functions.

The method preferably further comprises modifying the combination of the actuation functions with the loads on the basis of the sequence of repeated actuations extracted at the end of the predetermined period of time or after the user has carried out a predefined number of actuations in such a manner that at least one actuation function is configured to carry out the actuation functions of the sequence of repeated actuations when actuated by the user.

It will be appreciated that, advantageously, the method set out above provides for a step of learning the sequence of actuations repeated by the user. According to another advantageous aspect, the method further comprises a step of interpretating the actuations carried out by the user on the basis of what has been learned in the learning step, as set out in detail below.

Therefore, preferably, the method further comprises automatically processing the actuations carried out for the predetermined period of time (or carried out until the predefined number of actuations is reached) so as to provide an interpretation of the actuations carried out by the user, and actuating one or more of the loads (preferably simultaneously) in accordance with the interpretation. It will be appreciated that, in one aspect, there is provision for exciting a relay of the control device in order to actuate one or more of the loads.

It may be noted that, in this context, the term "interpretation" is intended to be understood to be an automatic processing operation of an actuation which is carried out by a user, wherein the processing operation controls the actuation of one or more loads in accordance with the actuation carried out by the user and on the basis of what has been learned previously from a sequence of actuations repeated by the user.

There is further provision for the possibility of bypassing the interpretation in accordance with the actuation carried out by the user (that is to say, there is provision for the user to be able to bypass the interpretation by carrying out a predefined actuation, for example, by carrying out a long click or a double click on a button of the control device) and actuating one or more of the loads (preferably simultaneously) directly in accordance with the actuation carried out by the user. This possibility is particularly advantageous in all the situations in which the automatic interpretation supplied (or expected) by the system does not correspond to the real intentions of the user.

In fact, though they are sophisticated and make use of artificial intelligence, the automatic learning systems are still capable of supplying erroneous interpretations with respect to the real intentions of the user. Therefore, in order to reduce the error conditions concerning the automatic interpretation without further increasing the complexity of the predictive algorithms, the method of the invention provides for the user to be able to select whether or not to make use of the interpretation when an actuation is carried out.

It must be observed that, preferably, the control device is configured to operate according to an operating method which may be selected from a first operating method, which provides for actuating one or more of the loads (preferably simultaneously) in accordance with the interpretation, and a second operating method, which provides for bypassing the interpretation, the method preferably comprising selecting one of the operating methods. It may be noted that, below, the first operating method is also referred to as the "intelligent operating method" while the second operating method is also referred to as the "manual operating method".

In this manner, the user can make use of the first operating method when he carries out, for example, a statistically frequent actuation which has already been learned by the system and is therefore hardly susceptible to errors of interpretation by the system. Such an actuation may be, for example, that of opening a specific shutter by a specific control device in the morning and closing the same shutter by simultaneously switching on a specific light similarly by the same control device in the evening.

If, however, the user intends to carry out an actuation which can be predicted by the system only with difficulty because it is not statistically frequent, and is therefore highly susceptible to errors of interpretation, the user can make use of the second operating method, bypassing the interpretation and manually selecting the load which the user wishes to actuate. In order to reconnect to the previous example, such an actuation may be the one of closing the shutter in the morning instead of in the evening (or opening it in the evening instead of in the morning) similarly by the same control device.

It must be observed that the user is generally aware of his/her own habitual actuations and is therefore placed in a condition of knowing when there are reasonable probabilities that the actuation which he intends to carry out may or may not be correctly interpreted by the system. Therefore, the possibility of bypassing the interpretation by selecting the second operating method allows a large number of the errors of interpretation to be anticipated, or in any case all the ones which can be predicted by the user, thereby reducing the computational power required for the system in order to interpret actuations which are not statistically frequent.

Of course, there is provision for the possibility of storing and subjecting to automatic learning also the actuations which the user carries out in the second operating method. In this manner, the method according to the invention advantageously simplifies the experience of using the control device which may be used in different operating methods.

In some embodiments, the operating method can be selected by means of two different control devices or by means of the same control device (for example, with two buttons, two tactile zones, two actuation methods of a single button, etc.). In some variants, there is also provided the possibility of selecting the operating method by means of a voice assistant and/or a mobile device.

In any case, it is preferable for the operating method to be selectable by means of two actuation methods of a single button (or a single tactile interaction zone) of the control device. The first operating method can be selected, for example, by means of a single and/or brief click of the button while the second operating method can be selected, for example, by means of a double click or a long click similarly of the same button.

Therefore, it is preferable for the control device to have a button (or a tactile interaction zone) comprising two actuation methods which can select one or the other of the above-mentioned operating methods, respectively. Naturally, the control device may have additional buttons or additional tactile interaction zones. However, it is preferable for the control device to comprise a single button (or single tactile interaction zone) for carrying out the selection of the operating method. It is further preferable for the above-mentioned actuation methods of the button to be able to actuate the loads, where applicable by means of one or more relays which are associated with the control device. This configuration thereby allows the error conditions concerning the actuation carried out by the user to be reduced (for example, if the user presses the button incorrectly) and simplifies to the greatest possible extent the interaction with the electrical system.

It may be noted that the present invention is preferably used in domestic electrical systems. In this context, the simplicity of the interaction with the user is of fundamental importance because a domestic electrical system cannot have a complex human/machine interface which, for each interaction, compels the user to select from a high number of possible inputs as otherwise occurs in the industrial control systems which are intended for professional use.

In a preferred embodiment, the selection from the intelligent operating method and the manual operating method is carried out by means of overriding the automatic interpretation. In this context, the overriding is therefore intended to be understood to be preferably an embodiment of the bypass.

In this embodiment, there is provision for selecting the first operating method by carrying out a first actuation of the control device and where applicable selecting the second operating method by carrying out a second actuation of the control device after carrying out the first actuation.

In this manner, the user can always use the automatic interpretation provided by the system following the first actuation, but then correcting it - if the user is not satisfied with it - by switching into the manual operating method by means of the second actuation. Therefore, it will be appreciated that the second actuation constitutes an override actuation of the automatic interpretation initially provided by the system.

In order to bring about the override, the potential second actuation will preferably be carried out within a predefined period of time (for example, a number of seconds) from the time at which the first actuation is carried out.

In a preferred example, the control device comprises a button. In this case, selecting the first operating method preferably comprises carrying out a first actuation (for example, a first click) of the button while selecting the second operating method comprises carrying out a second actuation (for example, a second click) of the button after carrying out the first actuation.

It may be noted that, in this context, the term "button" is preferably used as a synonym for a push-button.

The control device is preferably configured to actuate one or more loads in the first operating method in response to the first actuation of the button and actuating one or more loads in the second operating method in response to the potential second actuation of the button to be carried out after the first actuation and preferably within the predefined time period.

Therefore, it will be appreciated that the second actuation, in addition to determining the override of the automatic interpretation and the switching of the control device to the manual operating method, preferably also provides the direct actuation of one or more loads which are associated with the control device.

Naturally, it is desirable to be able to select the specific load (or the combination of specific loads) to be actuated in the second operating method. To this end, the user can repeat the second actuation in order to modify the selection of the loads to be actuated in the second operating method. More particularly, by repeating the second actuation, the user can pass in sequence through different states of the system, to each of which a different combination of the loads to be actuated corresponds.

It is preferable for the potential repetition of the second actuation to be carried out within a predefined time period (for example, a number of seconds).

In some preferred embodiments, the system comprises a plurality of control devices and the method further comprises exchanging information items by means of a communication network.

In this context, there is advantageously provision for automatically processing an interpretation of the actuation in accordance with the combination and the information items, and in accordance with the interpretation actuating one or more loads combined with the control device or an additional control device of the plurality of control devices which is configured to exchange information items with the control device by means of the communication network.

Advantageously, the communication network comprises at least one communication network which may be selected from a wireless communication network, a wired communication network and a communication network of the powerline type.

It will be appreciated that the wireless communication network and/or the communication network of the powerline type simplify the connectivity and in particular the associations of the functions and the wiring.

According to another advantageous aspect, the communication network allows remote and local control with a smart phone and voice assistants.

It may be noted that, in this context, the term "wireless communication network" is intended to be understood to be a communication network between electronic devices which do not use wires and which preferably make use of radio waves, such as, for example, a communication network of the WiFi, ZigBee or Bluetooth type.

Furthermore, it may be noted that the term "communication network of the powerline type" (power line communication PLC) is intended to be understood to be a communication network which allows the transmission of data and/or voice by using an electrical supply network as the transmission medium.

In some preferred embodiments, the method further comprises carrying out time and/or brightness and/or acoustic and/or presence detections.

In this case, there is provision for modifying the combination of the actuation functions with the loads on the basis of the sequence of repeated actuations in relation to the detections extracted at the end of the predetermined period of time (or after the user has carried out the predefined number of actuations) in such a manner that at least one actuation function carries out the sequence of repeated actuations when actuated by the user.

Furthermore, there is advantageously provision for automatically processing in accordance with the combination and the detections the interpretation of the actuation carried out by the user and actuating one or more of the loads in accordance with the interpretation.

As will be set out in greater detail below, in one aspect the present invention relates to a control device for carrying out the above-mentioned method.

There is defined in the control device at least one actuation function which can be carried out by means of the control device and which is configured to actuate one or more loads. There are preferably defined in the control device a plurality of actuation functions which can be carried out by means of the control device and which are configured to actuate one or more loads. It is further preferable for the above-mentioned first and second operating methods to be defined in the control device so as to allow the user to select the desired operating method.

The control device comprises actuation means which are configured to receive the actuation carried out by the user.

It must be observed that the actuation means may comprise a button, such as, for example, a physical button (or other tactile and/or optical and/or acoustic interaction element) of the control device and/or a voice assistant and/or a mobile device. Advantageously, the control device is configured to implement the at least one actuation function (or the plurality of actuation functions) via the actuation means.

There are further provided storage means which are configured to electronically store the sequence of actuations repeated by the user, and a processing unit which is operatively connected to the storage means so as to automatically combine the at least one actuation function (or the plurality of actuation functions) with the loads on the basis of the sequence of repeated actuations which is stored by the storage means, and to automatically process the interpretation of the actuation in accordance with the sequence of repeated actuations.

It will be appreciated that the processing unit may comprise a programmable processing unit, such as, for example, a microcontroller or a microprocessor. Preferably, the control device further comprises at least two relays which are operatively connected to the processing unit so as to receive an excitation signal from the processing unit in accordance with the interpretation.

It will be appreciated that, advantageously, the presence of at least two relays which are associated with the control device covers the majority of the electrical system cases, including the control of interrupted light points, redirected light points, inverted light points and motorized shutters. For example, the presence of two relays which are associated with the control device allows control of two light points or a motorized shutter.

According to another advantageous aspect, the control device constitutes a digital device which is capable of replacing the conventional switches, affording advantages and an additional value both for the user and for professionals operating in the electrical sector.

In one aspect, the control device is provided with a button of the rocker type, preferably with two or four positions. It will be appreciated that, in some embodiments, the button is of the axial type.

According to another advantageous aspect, the button of the control device is configured to receive an extended and/or repeated actuation. The extended and/or repeated actuation is configured to bypass or force the interpretation so as to excite the relay directly in accordance with the extended and/or repeated actuation.

Advantageously, the control device comprises a single button (or a single tactile interaction zone) so as to reduce the error conditions with respect to the actuation carried out by the user (for example, if the user presses the button incorrectly) and to simplify to the greatest possible extent the interaction with the electrical system itself.

Naturally, the plurality of actuation functions can be carried out by means of the same control device with two or more actuation methods of a single button. Therefore, the actuation methods of the button may be able to select the intelligent operating method rather than the manual one, respectively. Additionally or alternatively, the actuation methods of the button may be able to actuate one or more loads, where applicable by means of one or more relays which are associated with the device.

Furthermore, it must be observed that the control device may further comprise an input which is normally open and which is configured to receive an instruction from another electromechanical light point.

Preferably, the control device further comprises communication means which are configured to exchange information with an additional control device.

In some preferred embodiments, the communication means are configured to exchange information via a communication network. In this context, the processing unit is advantageously operatively connected to the communication means so as to process the interpretation in accordance with the sequence of repeated actuations and the information items exchanged by means of the communication network.

It must be observed that the communication means advantageously comprise means which may be selected from wireless communication means, wired communication means and communication means of the powerline type.

It will be appreciated that, in the case of wireless communication means, there is preferably provision for a wireless communication network, in the case of wired communication means there is preferably provision for a wired communication network and, in the case of communication means of the powerline type, there is preferably provision for a communication network of the powerline type.

It will further be appreciated that any voice assistants and/or mobile devices are configured to exchange information items with the control device by means of the communication network. Advantageously, the compatibility with the voice assistants extends the usability and the simplicity of the electrical system and integrates the control device in the various home automation systems which are already widespread on the market, making it possible to use the control device in various areas of use, such as, for example, in public tenders.

On the basis of other aspects, the control device further comprises an integrated clock and/or a brightness sensor and/or an acoustic sensor and/or a presence sensor which are configured to provide a detection.

In this context, the storage means are operatively connected to the integrated clock and/or sensor so as to electronically store the actuation in relation to the detection supplied by the integrated clock and/or sensor. Furthermore, the processing unit is operatively connected to the integrated clock and/or sensor so as to automatically process the interpretation in accordance with the detection.

It may be noted that, in this context, the term "integrated clock" is intended to be understood to be a device capable of measuring time. In some embodiments, the integrated clock comprises an electronic device with an integrated circuit with the function of a clock, such as, for example, a real time clock (RTC). It will be appreciated that, in some cases, the integrated clock may comprise a quartz oscillator and/or may be synchronized via the internet.

It will be appreciated that the presence of sensors allows the control device also to predict in a more accurate manner the behaviour of the user in accordance with external environmental parameters which comprise information concerning brightness, time, presence, sound and so on. For example, with a single button the control device can activate different loads in accordance with the detections of the sensors.

In a preferred embodiment, the control device further comprises a support which is configured to mount the control device on a wall. Preferably, the support allows installation of the control device in boxes which are already present in a conventional electrical system. In this context, the control device advantageously allows simplified retrofitting of the conventional electrical systems by replacing old switches and using the same receiving boxes and extending the possibilities of logical interaction between switches.

As will be set out in greater detail below, in one aspect the present invention relates to a kit for carrying out the method described above.

The kit comprises a plurality of control devices which are configured to receive an actuation carried out by a user and to respond to the actuation as a single logic group, preferably a single logic group which is coordinated by means of algorithms of the master/slave type or by means of distributed algorithms.

The control devices of the plurality of control devices comprise respective communication means which are configured to exchange information between them by means of a communication network and respective processing units which are operatively connected to the respective communication means so as to automatically process an interpretation of the actuation in accordance with the information and to excite a relay of the plurality of control devices in accordance with the interpretation.

In one aspect, the plurality of control devices comprise a control device and an additional control device. The control device is configured to receive an actuation carried out by the user, to automatically process an interpretation of the actuation and to excite a relay of the control device and/or to transmit the interpretation to the additional control device by means of a communication network so as to excite a relay of the additional control device in accordance with the interpretation.

It will be appreciated that the ability to be logically grouped together of the plurality of control devices by means of a wireless communication network or by means of a communication network of the powerline type advantageously reduces the physical limitations of wiring. According to an additional advantageous aspect, it is possible to change the topology of the electrical controls without further damaging the old wiring.

According to further aspects, the present invention also relates a method for controlling an electrical system according to any one of the following items:

1. A method for controlling an electrical system, in particular for buildings, of the type comprising at least one control device and a plurality of loads, there being defined in the electrical system a plurality of actuation functions which can be carried out by means of the control device or by means of a plurality of the control devices, the loads being actuated by the actuation functions, the method comprising

- combining with the actuation functions the actuation of one or more of the loads in a unique manner;
- storing actuations carried out by a user for a predetermined period of time or storing a predefined number of actuations carried out by a user;
- extracting from the actuations stored a sequence of actuations repeated by the user, the sequence comprising at least two of the actuation functions;
- modifying the combination of the actuation functions with the loads on the basis of the sequence of repeated actuations extracted at the end of the predetermined period of time or after the user has carried out the predefined number of actuations in such a manner that at least one actuation function is configured to carry out the actuation functions of the sequence of repeated actuations when actuated by the user; and
- automatically processing the actuations carried out for the predetermined period of time or carried out until the predefined number of actuations is reached so as to provide an interpretation of the actuations carried out by the user, and actuating one or more of the loads in accordance with the interpretation;

wherein the control device is configured to function according to an operating method which may be selected from a first method, which provides for actuating one or more of the loads in accordance with the interpretation, and a second method, which provides for bypassing the interpretation, the method comprising selecting one of the operating methods.

2. A method according to item 1, wherein selecting the first operating method comprises carrying out a first actuation of the control device and wherein selecting the second operating method comprises carrying out a second actuation of the control device after carrying out the first actuation.

3. A method according to item 2, wherein selecting the second operating method comprises carrying out the second actuation within a predefined period of time from the time at which the first actuation is carried out.

4. A method according to item 2 or 3, wherein the control device comprises a button, and wherein selecting the first operating method comprises carrying out a first actuation of the button, and wherein selecting the second operating method comprises carrying out a second actuation of the button after carrying out the first actuation.

5. A method according to item 4, comprising actuating one or more of the loads in the first operating method in response to the first actuation of the button.

6. A method according to item 5, comprising actuating one or more of the loads in the second operating method in response to the second actuation of the button carried out after the first actuation.

7. A method according to item 6, comprising repeating the second actuation in order to modify the selection of the loads to be actuated in the second operating method.

8. A method according to any one of the preceding items, wherein the plurality of actuation functions are carried out by means of the same control device with two operating methods for a single button.

9. A method according to item 8, wherein the actuation methods of the button are capable of actuating one or more of the loads.

10. A method according to any one of the preceding items, wherein the sequence of actuations repeated by the user during the predetermined period of time is extracted by means of automatic learning systems.

11. A method according to item 10, the automatic learning systems comprising artificial intelligence algorithms.

12. A method according to any one of the preceding items, comprising exciting a relay of the control device in order to actuate one or more of the loads.

13. A method according to any one of the preceding items, wherein the system comprises a plurality of control devices, the method further comprising

- exchanging information by means of a communication network,
- in accordance with the interpretation, actuating one or more loads which are combined with a control device of the plurality and with an additional control device of the plurality which is configured to exchange information with the control device by means of the communication network.

14. A method according to any one of the preceding items, further comprising

- carrying out time and/or brightness and/or acoustic and/or presence detections,
- in relation to the detections modifying the combination of the actuation functions with the loads on the basis of the sequence of repeated actuations established at the end of the predetermined period of time or after the user has carried out the predefined number of actuations in such a manner that at least one actuation function carries out the sequence of repeated actuations when actuated by the user.

15. A method according to item 14, further comprising automatically processing in accordance with the combination and the detections the interpretation of the actuation carried out by the user and actuating one or more of the loads in accordance with the interpretation.

16. A method according to any one of items 13 to 15, wherein the communication network comprises at least one communication network which may be selected from a wireless communication network, a wired communication network and a communication network of the powerline type.

According to further aspects, the present invention also relates a control device for carrying out the method according to any one of the preceding items as defined by any one of the following additional items:

17. A control device for carrying out the method according to any one of the preceding items, wherein there is defined at least one actuation function which can be carried out through the control device and which is configured to actuate one or more of the loads, comprising:

- actuation means which are configured to receive the actuation carried out by the user,
- storage means which are configured to electronically store the sequence of actuations repeated by the user,
- communication means which are configured to exchange information with an additional control device,
- a processing unit which is operatively connected to the storage means so as to automatically combine the at least one actuation function with one or more of the loads on the basis of the sequence of repeated actuations which is stored by the storage means, and to automatically process the interpretation of the actuation in accordance with the sequence of repeated actuations,

wherein the control device is configured to function according to an operating method which may be selected from a first method, which provides for actuating one or more of the loads in accordance with the interpretation, and a second method, which provides for bypassing the interpretation, the method comprising selecting one of the operating methods.

18. A control device according to item 17, which is configured to function according to the first operating method in response to a first actuation which is carried out by a user, and which is configured to function according to the second operating method in response to a second actuation which is carried out by the user following the first actuation.

19. A control device according to item 18, which is configured to function according to the second operating method on condition that the second actuation is carried out within a predefined period of time from the time at which the first actuation is carried out.

20. A control device according to any one of items 17 to 19, wherein the actuation means comprise a button.

21. A control device according to any one of items 17 to 20, comprising a single button.

22. A control device according to item 20 or 21, wherein the button has two actuation methods which can select one or other of the operating methods, respectively.

23. A control device according to any one of items 20 to 22, which is configured to function according to the first operating method in response to a first actuation of the button, and which is configured to function according to the second operating method in response to a second actuation of the button carried out after the first actuation.

24. A control device according to any one of items 20 to 23, wherein the actuation methods of the button are capable of actuating one or more of the loads.

25. A control device according to any one of items 20 to 24, which is configured to actuate one or more of the loads in the first operating method in response to a first actuation of the button, and which is configured to actuate one or more of the loads in the second operating method in response to a second actuation of the button carried out after the first actuation.

26. A control device according to item 25, which is configured to modify the selection of loads to be actuated in the second operating method in response to a repetition of the second actuation.

27. A control device according to any one of items 17 to 26, comprising at least two relays which are operatively connected to the processing unit so as to receive an excitation signal from the processing unit in accordance with the interpretation.

28. A control device according to item 27 when dependent on any one of items 20 to 26, wherein the actuation methods of the button are capable of actuating one, the other or both of the relays.

29. A control device according to item 28, which is configured to actuate one, the other or both of the relays in the first operating method in response to a first actuation of the button, and in the second operating method in response to a second actuation of the button which is carried out after the first actuation.

30. A control device according to any one of items 17 to 29, wherein there is defined a plurality of actuation functions which can be carried out through the control device and which are configured to actuate one or more of the loads, the processing unit being operatively connected to the storage means so as to automatically combine the actuation functions with one or more of the loads on the basis of the sequence of repeated actuations stored by the storage means and to automatically process the interpretation of the actuation in accordance with the sequence of repeated actuations.

31. A control device according to item 30, wherein the plurality of actuation functions is carried out through the same control device with two actuation methods of a single button.

32. A control device according to any one of items 17 to 31, wherein the communication means are configured to exchange information through a communication network, the programmable processing unit being operatively connected to the communication means so as to process the interpretation in accordance with the sequence of repeated actuations and the information.

33. A control device according to any one of items 17 to 32, wherein the communication means comprise means which may be selected from wireless communication means, wired communication means and communication means of the powerline type.

34. A control device according to item 33 when dependent on item 32, the communication network comprising a communication network which may be selected from a wireless communication network, a wired communication network and a communication network of the powerline type, respectively.

According to further aspects, the present invention also relates a kit for carrying out the method according to any one of items 1 to 16, as defined by the any one of the following additional items:

35. A kit for carrying out the method according to any one of items 1 to 16, comprising a plurality of control devices which are constructed according to item 32, 33 or 34 and which are configured to receive an actuation carried out by a user and to respond to the actuation as a single logic group, the control devices comprising respective communication means which are configured to exchange information between them through a communication network and respective processing units which are operatively connected to the respective communication means so as to automatically process an interpretation of the actuation in accordance with the information and to excite a relay of the plurality of control devices in accordance with the interpretation.

36. A kit according to item 35, wherein the control devices are configured to receive the actuation carried out by the user and to respond to the actuation as a single logic group which is coordinated by means of an algorithm of the master/slave type or by means of a distributed algorithm.

The features and advantages of the invention will be better appreciated from the following detailed description of a preferred though non-limiting embodiment thereof which is illustrated by way of non-limiting example with reference to the appended drawings, in which:

- Figure 1 is a schematic illustration of the electrical system according to the invention;
- Figure 2 is a schematic illustration of the electrical system of Figure 1 according to another embodiment.

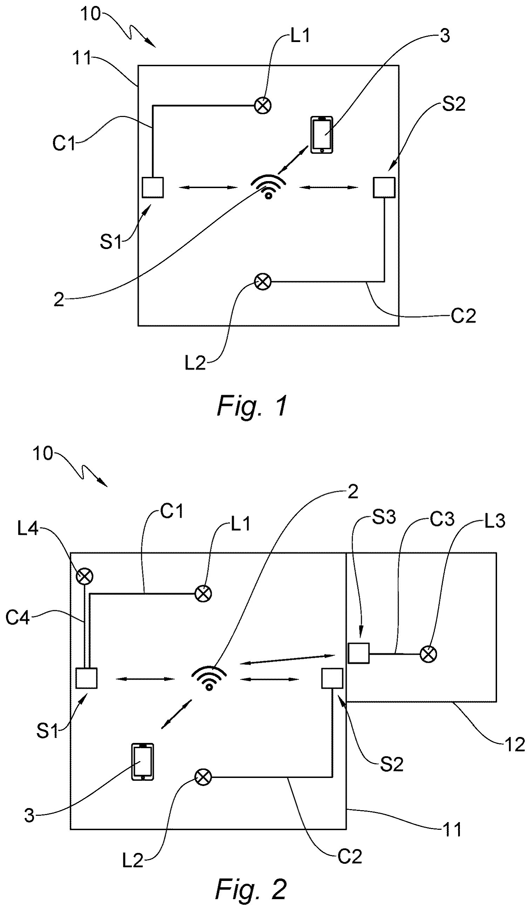

In the Figures, there is generally designated 10 an electrical system which comprises one or more control devices S1, S2, S3. In a preferred embodiment, the control devices are in the form of single switches, each one being configured to perform a load actuation function, for example, switching a light on or off. Therefore, reference will also be made below to the control devices using the term "switches". In any case, it will be appreciated that the control devices may be constructed in such a manner that each of them can allow the actuation of a plurality of loads, for example, by providing a plurality of corresponding buttons. Figure 1 schematically illustrates the electrical system 10, in which there are provided a switch or control device S1 and an additional switch or control device S2 which are wall-mounted in a room 11.

The control device S1 is electrically connected to a load L1 by means of an electric circuit C1 while the additional control device S2 is connected to an additional load L2 by means of an additional electric circuit C2.

In the embodiment illustrated, the loads L1 and L2 are two light points.

There are further provided a WiFi network 2 and, preferably, a mobile device 3. It will be appreciated that the present invention may also be used with other communication systems (wireless or wired) alternatively to or in conjunction with the WiFi network 2. The mobile device 3, which is formed by a smart phone in the embodiment illustrated, may also be replaced by other equivalent devices or the functionalities thereof may be integrated in one or more of the control devices S1, S2.

It must be observed that the control device S1, the additional control device S2 and the mobile device 3 are configured to exchange information with each other by means of the network 2.

In an initial configuration step of the electrical system 10, there are provided configuration means (for example, mobile application or desktop) in order to associate each control device S1, S2 with identification metadata of the electrical system 10 and the room 11. It is further possible to group together the control devices S1, S2 in order to connect together the loads L1, L2. In this manner, it is possible to supply to the control devices S1, S2 the configurations necessary for connecting and exchanging useful information items (the actuation clicks carried out by the user and the inputs from another electromechanical light point) acting as if it were a single group entity, using the WiFi network 2 as a routing channel.

In a preferred embodiment, each control device S1, S2 has at least two relays and at least two actuation functions. In one aspect, each control function of a control device is associated with a respective relay of the control device. A single load L1 or L2 is physically connected to each control function (on one of the relays). However, the two control devices S1, S2 are configured in a group in order to act as a single entity and are individually capable of actuating both the loads L1, L2 (also one at a time).

In one aspect, the configuration of the control devices S1, S2 in the electrical system 10 can be managed by means of a mobile application (mobile app), desktop application or simply with combinations of buttons of the control devices S1, S2 and/or interactions with the control devices S1, S2. Advantageously, the combination of the actuation functions of the control devices S1, S2 with the loads L1, L2 is learned progressively. Preferably, one combination is learnt at a time and then the learnt combinations are grouped together.

In a first logical operating step of the electrical system 10 mainly in learning mode, the control devices S1, S2 use a so-called "manual" operation, that is to say, without artificial intelligence. Under these conditions, in accordance with the number of loads L1, L2 configured, with a repeated interaction with each control device S1, S2 there are selected all the possible combinations of actuations possible for the loads L1, L2 for the specific circumstance, starting from the actuation of the "local" loads L1, L2, that is to say, of the loads L1, L2 which are electrically connected to a control device S1, S2 and the desired combination of the actuation functions of the control devices S1, S2 with the loads L1, L2 is set up.

After a specific time period (and therefore after a specific number of imposed states, the intelligent algorithm becomes active and the electrical system 10 changes to a second operating step in intelligent mode. In this context, when the user carries out the actuation of a control device S1 or S2, the most probable configuration is actuated in accordance with the surrounding conditions and the habits recorded on the basis of the sequence of actuations repeated by the user.

Advantageously, it is always possible to bypass the intelligent operating method of each control device S1, S2 by means of a predefined interaction with the respective control device S1 or S2 (for example, by means of a long click or double click), forcing the system into manual operation. In a highly preferred embodiment, the user can click a first time on the button of the control device in order to obtain a response in intelligent mode and, if not satisfied with the response obtained (for example, actuation does not correspond to the effective intentions of the user), the user can click a second time on the same button in order to obtain the override of the automatic interpretation and the change to manual mode or, more generally, into any mode other than the one on the basis of which the device operates following the first press of the button.

In one aspect, the electrical system 10 constitutes a logic system which is composed of N switches or control devices S1, S2, S3, ..., SN which are configured together by suitable software or mobile application.

It will be appreciated that the relays used in the system and configured with a load have a state which can be composed by the following information items:

$$ACT = [ACTUATOR1, ACTUATOR2, ..., ACTUATORN]$$

where:

- ACTUATOR1 = state of relay 1 (local)
- ACTUATOR2 = state of relay 2 (local)
- ACTUATORN = state of relay N (remote)

In this context, the inputs of the system which provoke an interaction of the finite state machine (FSM) are:

- input from control device $A_x$ (with x being from 1 to N) in position $P_y$,
- input from sensor $S_x$ (with x being from 1 to N) with value V,
- input from voice command, software or mobile application,

where a distinction is not made between local and remote.

The FSM considers an infinite loop, in which the input is given by inputs concerning the current state of the system, and the output is the next state and a series of actuation instructions. The transaction functions depend on the algorithmic analysis of the state, the inputs and the historical records and provide the actuations to be carried out.

One possible embodiment provides for a configuration of the master/slave type with a control device of the master type and a given number of control devices of the slave type.

In this context, the slave control device is configured to transmit by means of a communication network (for example, the WiFi network 2) all the local input data and to react to any instruction of the master control device.

Vice versa, the master control device is configured to receive all the local and remote inputs by interacting with the FSM. With respect to inputs, the FSM by means of an artificial intelligence algorithm (preferably of the "supervised learning" type) is configured to supply an output state to be actuated and therefore instructions to be carried out (local and remote).

It will be appreciated that the configuration of the master/slave type has the advantage of simplifying the algorithmic support.

In some embodiments, the configuration of the master/slave type is replaced by using a distributed architecture with a simple synchronization of the data by means of a communication network, such as, for example, the WiFi network 2. In this context, each control device S1, S2 is independent in terms of the actuations thereof but receives the inputs from all the other connected control devices of the group. This embodiment has the advantage of reducing the possibility of malfunction problems of the group.

In preferred embodiments, there is provision for the compatibility with voice assistants **(for example,** Echo ® of Alexa ® or Google Home ®), by means of the relevant app. In this case, the user carries out a voice request which is intercepted by the cloud of the voice assistant and converted, by means of a skill software item, into an instruction for the local control device S1, S2.

Preferably, the skill software also allows the voice generation or the modification of more complex circumstances in the logic group.

In this context, by means of the app it is advantageously possible to accurately configure the desired circumstance, including without using an artificial intelligence algorithm. In fact, it must be observed that the voice interaction can be more structured and less approximate than the interaction with the button of the control device can be, and therefore may not require a particular form of artificial intelligence.

According to another advantageous aspect, the control devices S1, S2 have sensors (for example, brightness and/or acoustic and/or presence sensors) which allow an improvement in the output responses of the algorithm and/or the implementation of advanced circumstances which are freely programmable by the user.

In one aspect, the control device S1 or S2 has a brightness sensor which allows an understanding of how many light points (corresponding to the loads L1, L2) to switch on in accordance with the brightness level present in the room 11.

According to another advantageous aspect, there may be programmed a number of events by means of configuration software, for example, switching on one or more loads L1, L2 can be programmed in the event of sound pressure or when a predetermined level of brightness decreases.

In some embodiments, there is provided an audio sensor (preferably of the mems microphone type) which allows human activity in the room 11 to be detected and allows parameters which can be used by the artificial intelligence to be inferred for the decisions to be taken with respect to the actuations carried out by the user.

In the example illustrated in Figure 2, the electrical system 10 involves the room 11 and an additional room 12. In this case, in addition to the control devices S1 and S2, there is provided an additional control device S3 which is electrically connected to an additional load L3 by means of an additional electric circuit C3. Furthermore, the control device S1 is electrically connected to the load L1 and furthermore to an additional load L4 by means of the electric circuit C1 and an additional electric circuit C4, respectively. Preferably, the loads L1, L2, L3, L4 are light points.

In this case, there are also provided the WiFi network 2 which forms part of the infrastructure and the mobile device 3 which configures the electrical system 10 so that it responds as a single logic group. It will be appreciated that, in some cases, the mobile device 3 and/or the relevant mobile application can be replaced by a desktop application having similar functionality.

In this context, the basic interaction with a control device S1, S2 or S3 during manual operation has a predetermined access method by the user (for example, by means of a double click or long click on the button of the control device or by means of a second override click within a specific time period from the time at which a first actuation click is carried out in intelligent mode), which allows a cyclical run-through (for example, by means of repetition of the second click) of all the possible configurations in the different permutations, starting with the local ones which are connected to the control device selected.

For example, after a first click on the control device S1 with a resultant response of the system in intelligent mode and a subsequent second click similarly on the device S1 with a resultant override of the response initially provided, from the control device S1 by further clicking with the manual mode, the 16 possible permutations will be passed through one after the other ($2^4$, that is to say, two on/off states per four possible loads L1, L2, L3, L4), starting from the local ones. Therefore, if ACT = [L1, L2, L3, L4] is the vector of the states of the loads (that is to say, of the relays configured), the possible configurations comprise:

- [1,0,0,0] local at the control device S1 (load L1 actuated),
- [0,0,0,1] local at the control device S1 (load L4 actuated),
- [1,0,0,1] local at the control device S1 (loads L1, L4 actuated),
- [1,1,0,0] mixed (loads L1, L2 actuated), and so on.

It will be understood that this is a preferred embodiment of the second method and, in accordance with the field of application of the device, the method which it accesses by means of the second press of the button (or on the basis of other actions by the user as an alternative to the normal pressing of the button) may be different from the one described above.

It will be appreciated that, in accordance with the algorithm type selected during implementation (master/slave or distributed), the control devices S1, S2, S3 have a different behaviour from firmware.

For example, a master control device is configured to apply the requests in manual operating methods and, after a predetermined time period, to take account of the state of the system by recording the parameters of the sensors, the time and the transition input used (in this case, the control device clicked). In the case of a distributed algorithm, however, this will be done by each control device S1, S2, S3.

Advantageously, once a sufficient number of recorded states has been formed, the system will continue as a first interaction on the control device in the intelligent operating method, using the configuration defined by the artificial intelligence algorithm. Advantageously, there is always the possibility of using the pre-established method in order to switch to the manual operating method and to cyclically pass through the different possible configurations so as to select the desired configuration.

In one aspect, the intelligent operating method takes account of the interaction point, that is to say, the control device S1, S2 or S3 on which the user carries out the actuation. For example, in a manner which is logical per se, the control device S2 controls with greater probability the actuation of the load L2 to which it is electrically connected. Similarly, by clicking on the control device S1, the joint actuation of the loads L1 and L4 which are electrically connected to the control device S1 is more highly probable.

It will be appreciated that, advantageously, the mechanism for switching the transitions by means of the WiFi network 2 is completely transparent to the system, thereby making all three of the control devices S1, S2, S3 seem to be physically connected.

In preferred embodiments, the software app can interact in the manner of a virtual control device with intelligent operating methods and/or selecting pre-established and configured switching-on circumstances. Preferably, these circumstances can then also be called up by means of a voice interface.

In one aspect, the electrical system 10 illustrated in Figure 2 comprises a brightness sensor (not shown) which is connected to the control device S1 or S2 so as to increase the precision of the algorithms. For example, by clicking on the control device S1 at the time 16:00 in the afternoon on a rainy day with dim light, the algorithm could control the joint switching-on of the lights corresponding to the loads L1, L2, L4, all three of which are in the same room 11. It must be observed that the algorithm perceives the proximity between the loads L1, L2, L4 as a purely mathematical and statistical question.

According to another advantageous aspect, the mobile application allows configuration of the automated switching on/off circumstances by using the brightness sensor.

The invention thereby solves the problem set out by achieving a number of advantages, including:

- simplifying the user experience by means of artificial intelligence algorithms,
- simplifying the wiring,
- simplifying the association of the functions,
- local and remote control,
- connectivity with smart phone and voice assistants.

**Claims**

1. A method for controlling an electrical system (10) for buildings, of the type comprising a plurality of control devices (S1; S2; S3) and a plurality of loads (L1, L2, L3, L4), the control devices (S1; S2; S3) comprising a respective support configured to mount the control device on a wall of the building, there being defined in the electrical system (10) a plurality of actuation functions which can be carried out by means of the control device (S1; S2; S3) or by means of a plurality of the control devices, the loads (L1, L2, L3, L4) being actuated by the actuation functions, the method comprising

   • mounting the control devices (S1; S2; S3) in different locations on the wall by means of the respective support;
   • combining with the actuation functions the actuation of one or more of the loads (L1, L2, L3, L4) in a unique manner;
   • storing actuations carried out by a user for a predetermined period of time or storing a predefined number of actuations carried out by a user;
   • extracting from the actuations stored a sequence of actuations repeated by the user, the sequence comprising at least two of the actuation functions;
   • modifying the combination of the actuation functions with the loads (L1, L2, L3, L4) on the basis of the sequence of repeated actuations extracted at the end of the predetermined period of time or after the user has carried out the predefined number of actuations in such a manner that at least one actuation function is configured to carry out the actuation functions of the sequence of repeated actuations when actuated by the user; and
   • automatically processing the actuations carried out for the predetermined period of time or carried out until the predefined number of actuations is reached so as to provide an interpretation of the actuations carried out by the user, and actuating one or more of the loads (L1, L2, L3, L4) in accordance with the interpretation;

   wherein each of the control devices (S1; S2; S3) is configured to function according to an operating method which may be selected from a first method, which provides for actuating one or more of the loads (L1, L2, L3, L4) in accordance with the interpretation, and a second method, which provides for bypassing the interpretation, the method comprising selecting one of the operating methods.

2. A method according to claim 1, wherein selecting the second operating method comprises carrying out the second actuation within a predefined period of time from the time at which the first actuation is carried out.

3. A method according to any one of the preceding claims, wherein the plurality of actuation functions are carried out by means of the same control device (S1; S2; S3) with two operating methods for a single button.

4. A method according to claim 3, wherein the actuation methods of the button are capable of actuating one or more of the loads (L1, L2, L3, L4).

5. A method according to any one of the preceding claims, wherein the sequence of actuations repeated by the user during the predetermined period of time is extracted by means of automatic learning systems.

6. A method according to claim 5, the automatic learning systems comprising artificial intelligence algorithms.

7. A method according to any one of the preceding claims, comprising exciting a relay of one of the control device (S1; S2; S3) in order to actuate one or more of the loads (L1, L2, L3, L4).

8. A method according to any one of the preceding claims, further comprising

   • exchanging information by means of a communication network,
   • in accordance with the interpretation, actuating one or more loads (L1, L2, L3, L4) which are combined with a first control devices (S1) of the plurality of control devices and with an additional control device (S2; S3) of the plurality which is configured to exchange information with the control device (S1) by means of the communication network.

9. A method according to any one of the preceding claims, further comprising

   • carrying out time and/or brightness and/or acoustic and/or presence detections,
   • in relation to the detections modifying the combination of the actuation functions with the loads (L1, L2, L3, L4) on the basis of the sequence of repeated actuations established at the end of the predetermined period of time or after the user has carried out the predefined number of actuations in such a manner that at least one actuation function carries out the sequence of repeated actuations when actuated by the user.

10. A method according to claim 9, further comprising automatically processing in accordance with the combination and the detections the interpretation of the actuation carried out by the user and actuating one or more of the loads (L1, L2, L3, L4) in accordance with the interpretation.

11. A method according to any one of claims 8 to 10, wherein the communication network comprises at least one communication network which may be selected from a wireless communication network, a wired communication network and a communication network of the powerline type.

12. A method according to any one of the preceding claims, wherein the loads (L1, L2, L3, L4) are light points.

13. A method according to any one of the preceding claims, wherein the button is a physical button of the control device.

14. A method according to any one of the preceding claims, wherein the second actuation constitutes an override actuation of the automatic interpretation initially provided.

15. A kit for carrying out the method according to any one of claims 1 to 14, comprising a plurality of control devices (S1, S2, S3) configured for carrying out the method according to any one of the preceding claims, wherein there is defined at least one actuation function which can be carried out through the control devices (S1; S2; S3) and which is configured to actuate one or more of the loads (L1, L2, L3, L4), each of the control device (S1; S2; S3) comprising:

   • a support configured to mount the respective control device (S1; S2; S3) on a wall,
   • actuation means which are configured to receive the actuation carried out by the user,
   • storage means which are configured to electronically store the sequence of actuations repeated by the user,
   • communication means which are configured to exchange information with an additional control device,
   • a processing unit which is operatively connected to the storage means so as to automatically combine the at least one actuation function with one or more of the loads (L1, L2, L3, L4) on the basis of the sequence of repeated actuations which is stored by the storage means, and to automatically process the interpretation of the actuation in accordance with the sequence of repeated actuations,

wherein the control device (S1; S2; S3) is configured to function according to an operating method which may be selected from a first method, which provides for actuating one or more of the loads (L1, L2, L3, L4) in accordance with the interpretation, and a second method, which provides for bypassing the interpretation, the method comprising selecting one of the operating methods, wherein the actuation means comprise a button, and wherein each of the control devices (S1; S2; S3) is configured to function according to the first operating method in response to a first actuation of the button, and is configured to function according to the second operating method in response to a second actuation of the button carried out after the first actuation, the control device (S1; S2; S3) being further configured to:

• actuate one or more of the loads (L1, L2, L3, L4) in the first operating method in response to a first actuation of the button;
• actuate one or more of the loads (L1, L2, L3, L4) in the second operating method in response to a second actuation of the button carried out after the first actuation;

modify the selection of loads (L1, L2, L3, L4) to be actuated in the second operating method in response to a repetition of the second actuation, wherein the control devices (S1, S2, S3) are configured to receive an actuation carried out by a user and to respond to the actuation as a single logic group, the control devices (S1, S2, S3) comprising respective communication means which are configured to exchange information between them through a communication network and respective processing units which are operatively connected to the respective communication means so as to automatically process an interpretation of the actuation in accordance with the information and to excite a relay of the plurality of control devices (S1, S2, S3) in accordance with the interpretation.

Fig. 1

Fig. 2